# DEMANDE DE BREVET EUROPEEN

(11) **EP 4 037 289 A1**
(43) Date de publication de la demande: **03.08.2022**
(21) Numéro de dépôt: 22153448.0
(22) Date de dépôt: 26.01.2022
(51) Int. Cl.: H04L 45/02

(54) **PROCEDE DE DETERMINATION SI UNE ADRESSE IP EST ATTRIBUEE A UN TERMINAL DANS UN RESEAU DE COMMUNICATION**

(30) Priorité: 29.01.2021 FR 2100885
(71) Demandeur: SAGEMCOM BROADBAND SAS, 92500 Rueil-Malmaison (FR)
(72) Inventeur: ALARCON, Laurent, 92500 Rueil Malmaison (FR)
(74) Mandataire: Cabinet Le Guen Maillet

(57) **Abrégé**

Procédé de détermination si une adresse IP est attribuée dans un réseau de communication comportant au moins une passerelle, ledit procédé étant réalisé par la passerelle et comportant : configurer un filtre permettant de recevoir (400) des premiers messages de test d'adresse, chaque premier message de test d'adresse filtré ciblant une adresse IP cible et requérant à tout terminal auquel est attribuée l'adresse IP cible d'envoyer un message de signalement d'adresse ; sur réception d'un dit premier message filtré, envoyer (412) au moins un second message de test d'adresse ciblant ladite adresse IP cible ; déterminer (422) que l'adresse IP cible est attribuée à un terminal si un message de signalement d'adresse ayant ladite adresse IP cible pour adresse IP source est reçu (420) ; et déterminer (415) que l'adresse IP cible n'est pas attribuée à un terminal si aucun message de signalement d'adresse ayant ladite adresse IP cible pour adresse IP source n'est reçu lorsqu'un nombre de seconds messages de test d'adresse envoyés dépasse un seuil prédéfini.

## Description

### DOMAINE TECHNIQUE

La présente invention concerne un procédé visant à déterminer si une adresse IP est attribuée à un terminal dans un réseau de communication, et plus particulièrement dans un cas où l'adresse IP est attribuée au terminal par autoconfiguration.

### ETAT DE LA TECHNIQUE ANTERIEURE

Un réseau de communication local peut être interconnecté avec un réseau de communication étendu à l'aide d'une passerelle. Des communications sont alors possibles depuis le réseau de communication local vers le réseau de communication étendu, et vice versa, en partageant un même protocole, typiquement le protocole IP (« Internet Protocol » en anglais). Au moins une adresse IP doit alors être attribuée à chaque terminal du réseau de communication local pour que ledit terminal puisse communiquer avec au moins un autre terminal via le réseau de communication local et éventuellement via le réseau de communication étendu.

L'attribution d'adresses IP peut être effectuée selon différentes procédures, comme par exemple celles décrites par le document normatif RFC 4862 (RFC pour « Request For Comments » en anglais) ou le document normatif RFC 8415, dans lesquelles la passerelle ou un serveur DHCP (« Dynamic Host Configuration Protocol » en anglais) attribue tout ou partie d'une adresse IP à un terminal du réseau de communication local ayant effectué une demande adresse IP. L'une des différentes procédures d'attribution d'adresses IP existantes, décrite par le document normatif RFC 4862, concerne un procédé d'autoconfiguration implémenté par le terminal souhaitant s'assigner une adresse IP. Dans un tel cas, le terminal sélectionne lui-même son adresse IP en combinant à un préfixe prédéfini une partie additionnelle qui peut par exemple être choisie par le terminal de manière arbitraire. Avant de s'assigner l'adresse IP sélectionnée, le terminal doit toutefois d'abord s'assurer que ladite adresse IP n'est pas déjà utilisée par un autre terminal, autrement dit que ladite adresse IP n'est pas déjà attribuée à un autre terminal. Le terminal doit donc vérifier la disponibilité de cette adresse IP et peut ensuite, si l'adresse IP est disponible, s'assigner ladite adresse IP. En revanche, si l'adresse IP sélectionnée est déjà attribuée à un autre terminal, le terminal doit sélectionner une autre adresse IP et vérifier à nouveau la disponibilité de ladite adresse IP.

Lorsqu'un terminal s'assigne une adresse IP selon le procédé d'autoconfiguration, aucune information indiquant que ladite adresse IP est attribuée n'est transmise dans le réseau de communication local tant que le terminal n'émet pas de trafic. Ainsi, la passerelle n'obtient aucune indication permettant de savoir que ladite adresse IP est effectivement attribuée audit terminal et ne connaît donc pas ladite adresse IP.

Il est alors souhaitable de pallier ces inconvénients de l'état de la technique. Il est notamment souhaitable de fournir une solution qui permette à la passerelle de connaître une adresse IP attribuée par le procédé d'autoconfiguration.

### EXPOSE DE L'INVENTION

Un objet de la présente invention est de proposer un procédé de détermination si une adresse IP est attribuée dans un réseau de communication comportant au moins une passerelle, ledit procédé réalisé par la passerelle comportant :
- configurer un filtre permettant de recevoir des premiers messages de test d'adresse, chaque premier message de test d'adresse filtré ciblant une adresse IP, dite adresse IP cible, et requérant à tout terminal auquel est attribuée l'adresse IP cible et recevant ledit premier message de test d'adresse d'envoyer un message de signalement d'adresse,
- sur réception d'un dit premier message de test d'adresse filtré, envoyer au moins un second message de test d'adresse ciblant ladite adresse IP cible,
- déterminer que l'adresse IP cible est attribuée à un terminal si un message de signalement d'adresse ayant ladite adresse IP cible pour adresse IP source est reçu, et
- déterminer que l'adresse IP cible n'est pas attribuée à un terminal si aucun message de signalement d'adresse ayant ladite adresse IP cible pour adresse IP source n'est reçu lorsqu'un nombre de seconds messages de test d'adresse ciblant ladite adresse IP cible qui ont été envoyés par ladite passerelle dépasse un seuil prédéfini.

Ainsi, la passerelle peut déterminer qu'une adresse IP est attribuée à un terminal dans un cas où ledit terminal s'assigne ladite adresse IP dans le cadre d'un procédé d'autoconfiguration.

Selon un mode de réalisation particulier, un envoi de second message de test d'adresse ciblant ladite adresse IP cible est temporellement séparé d'un précédent envoi d'un second message de test d'adresse ciblant ladite adresse IP cible par un délai de durée *k* prédéfinie.

Selon un mode de réalisation particulier, chaque second message de test d'adresse est envoyé à destination d'une adresse de diffusion globale, chaque terminal du réseau de communication recevant chaque message envoyé à ladite adresse de diffusion globale.

Selon un mode de réalisation particulier, chaque message de test d'adresse est envoyé à destination d'une adresse de multidiffusion, ladite adresse de multidiffusion étant définie par un préfixe prédéfini et par les *n* derniers bits de l'adresse IP cible, *n* étant un entier prédéfini, chaque terminal du réseau de communication dont l'adresse IP se termine par lesdits *n* derniers bits étant supposé être abonné à ladite adresse de multidiffusion afin de recevoir chaque message envoyé à ladite adresse de multidiffusion.

Selon un mode de réalisation particulier, chaque envoi de second message de test d'adresse ciblant l'adresse IP cible est effectué à un instant *t* tel que *t = t0ᵢ*+*k*(cᵢ*+*1)*, *t0ᵢ* étant l'instant de réception du premier message de test d'adresse ciblant ladite adresse IP cible et *cᵢ* étant un compteur de tests associé à ladite adresse IP cible, et le procédé comporte en outre :
- sur réception d'un dit premier message de test d'adresse filtré, enregistrer ladite adresse IP cible dans une table en association avec l'instant *t0ᵢ* de réception dudit premier message de test d'adresse et avec le compteur de tests *cᵢ* initialisé à zéro, où *i* représente un index d'entrée de la table,
- incrémenter le compteur de tests *cᵢ* d'une unité à chaque envoi d'un dit second message de test d'adresse ciblant ladite adresse IP cible,
- supprimer l'adresse IP cible de la table si un message de signalement d'adresse ayant ladite adresse IP cible pour adresse IP source est reçu, ou lorsque le nombre de seconds messages de test d'adresse ciblant ladite adresse IP cible qui ont été envoyés par la passerelle, sans message de signalement d'adresse reçu en retour, dépasse le seuil prédéfini.

Selon un mode de réalisation particulier, le procédé comporte en outre, pour chaque premier message de test d'adresse ciblant une adresse IP cible filtré reçu, d'initialiser un minuteur de durée prédéfinie *k* à l'instant *t0ᵢ* de réception du premier message de test d'adresse, et dans lequel chaque envoi de second message de test d'adresse ciblant ladite adresse IP cible est effectué lorsque le minuteur arrive à échéance, et le procédé comporte en outre de réinitialiser ledit minuteur de la durée *k* à chaque envoi par la passerelle d'un dit second message de test d'adresse ciblant ladite adresse IP cible si le nombre de seconds messages de test d'adresse ciblant ladite adresse IP cible qui ont été envoyés par ladite passerelle est inférieur au seuil prédéfini.

Selon un mode de réalisation particulier, le procédé comporte en outre, pour chaque adresse cible enregistrée dans la table :
- initialiser un minuteur de durée prédéfinie *k* à l'instant *t0ᵢ* de réception d'un dit premier message de test d'adresse ciblant ladite adresse IP cible seulement si la table est vide à la réception dudit premier message de test d'adresse,
- envoyer un dit second message de test d'adresse ciblant ladite adresse IP cible seulement si le minuteur arrive à échéance à l'instant *t* tel que *t = t0ᵢ*+*k*(cᵢ*+*1)*,
Et le procédé comporte en outre, pour l'ensemble des adresses IP cibles d'index *i* de la table :
- réinitialiser le minuteur pour une durée *k'* telle que *k' = MIN((t0ᵢ*+*k*(cᵢ*+*1)-t)* lorsque le minuteur arrive à échéance.

Ainsi, il est possible d'utiliser un minuteur unique pour l'ensemble des adresses IP cibles de la table.

Selon un mode de réalisation particulier, le procédé comporte en outre d'enregistrer dans la passerelle chaque adresse IP cible déterminée comme étant attribuée à un terminal.

Selon un mode de réalisation particulier, le procédé comporte en outre de compléter une table de voisinage avec ladite adresse IP cible déterminée comme étant attribuée à un terminal.

Selon un mode de réalisation particulier, enregistrer dans la passerelle l'adresse IP cible déterminée comme étant attribuée à un terminal comporte d'obtenir, dans le message de signalement d'adresse ayant ladite adresse IP cible pour adresse IP source qui a été reçu, une adresse MAC dudit terminal, et le procédé comporte en outre de générer une règle d'ouverture de pare-feu associée audit terminal identifié par son adresse MAC.

Ainsi, il est possible de générer une règle de pare-feu adaptée à chaque terminal du réseau de communication avant que ledit terminal n'envoie de trafic.

L'invention concerne également une passerelle configurée pour déterminer si une adresse IP est attribuée dans un réseau de communication comportant ladite passerelle, la passerelle comportant :
- des moyens pour configurer un filtre permettant de recevoir des premiers messages de test d'adresse, chaque premier message de test d'adresse filtré ciblant une adresse IP, dite adresse IP cible, et requérant à tout terminal auquel est attribuée l'adresse IP cible et recevant ledit premier message de test d'adresse d'envoyer un message de signalement d'adresse,
- des moyens pour envoyer, sur réception d'un dit premier message de test d'adresse filtré, au moins un second message de test d'adresse ciblant ladite adresse IP cible,
- des moyens pour déterminer que l'adresse IP cible est attribuée à un terminal si un message de signalement d'adresse ayant ladite adresse IP cible pour adresse IP source est reçu, et
- des moyens pour déterminer que l'adresse IP cible n'est pas attribuée à un terminal si aucun message de signalement d'adresse ayant ladite adresse IP cible pour adresse IP source n'est reçu lorsqu'un nombre de seconds messages de test d'adresse ciblant ladite adresse IP cible qui ont été envoyés par ladite passerelle dépasse un seuil prédéfini.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur.

L'invention concerne également un support de stockage d'informations stockant un tel programme d'ordinateur.

L'invention concerne également une passerelle comportant de la circuiterie électronique configurée pour déterminer si une adresse IP est attribuée dans un réseau de communication comportant ladite passerelle, la circuiterie électronique étant en outre configurée pour :
- configurer un filtre permettant de recevoir des premiers messages de test d'adresse, chaque premier message de test d'adresse filtré ciblant une adresse IP, dite adresse IP cible, et requérant à tout terminal auquel est attribuée l'adresse IP cible et recevant ledit premier message de test d'adresse d'envoyer un message de signalement d'adresse,
- envoyer, sur réception d'un dit premier message de test d'adresse filtré, au moins un second message de test d'adresse ciblant ladite adresse IP cible,
- déterminer que l'adresse IP cible est attribuée à un terminal si un message de signalement d'adresse ayant ladite adresse IP cible pour adresse IP source est reçu, et
- déterminer que l'adresse IP cible n'est pas attribuée à un terminal si aucun message de signalement d'adresse ayant ladite adresse IP cible pour adresse IP source n'est reçu lorsqu'un nombre de seconds messages de test d'adresse ciblant ladite adresse IP cible qui ont été envoyés par ladite passerelle dépasse un seuil prédéfini.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication local relié à un réseau de communication étendu par l'intermédiaire d'une passerelle, selon un mode de réalisation ;
[Fig. 2] illustre schématiquement un procédé d'autoconfiguration d'une adresse IP réalisé par un terminal du réseau de communication local, selon un mode de réalisation ;
[Fig. 3] illustre schématiquement un procédé de vérification de disponibilité d'adresse IP qui est effectué dans le procédé d'autoconfiguration d'une adresse IP, selon un mode de réalisation ;
[Fig. 4] illustre schématiquement un procédé de détermination si une adresse IP est attribuée ou non à un terminal, selon un mode de réalisation ;
[Fig. 5] illustre schématiquement une première phase d'un procédé de gestion d'un minuteur unique permettant de mesurer un délai de durée *k*, selon un mode de réalisation ;
[Fig. 6] illustre schématiquement une seconde phase du procédé de gestion du minuteur unique permettant de mesurer un délai de durée *k*, selon un mode de réalisation ; et
[Fig. 7] illustre schématiquement une architecture matérielle de la passerelle, selon un mode de réalisation.

### EXPOSE DETAILLE DE MODES DE REALISATION

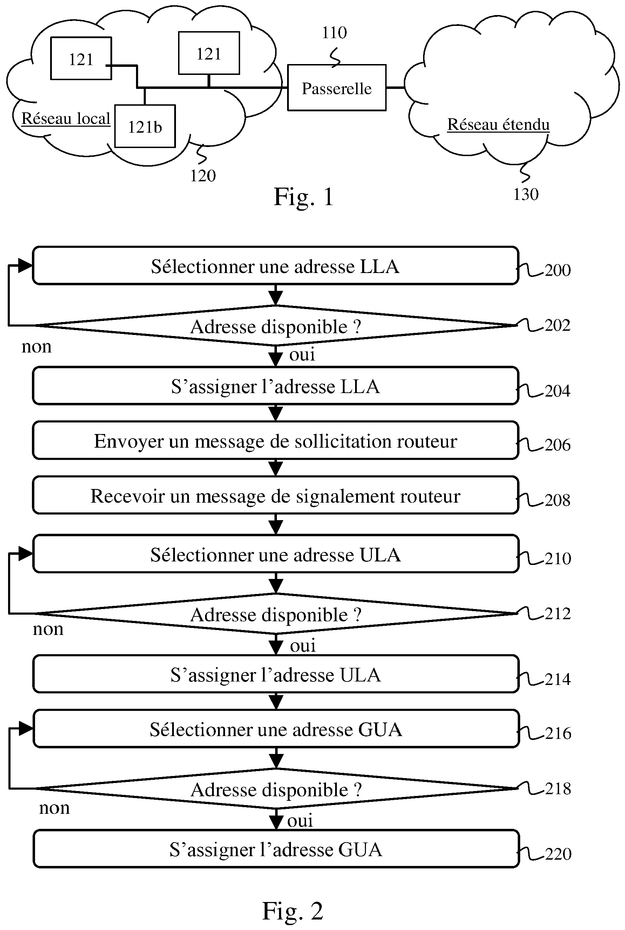

La Fig. 1 illustre ainsi schématiquement un système présentant un réseau de communication local, dit réseau local 120 relié à un réseau de communication étendu, dit réseau étendu 130 par l'intermédiaire d'une passerelle 110, selon un mode de réalisation.

Le réseau local 120 ou réseau LAN (« Local Area Network » en anglais) comporte au moins un terminal 121 connecté à la passerelle 110. Chaque terminal 121 peut communiquer dans le réseau local 120 en échangeant des données au niveau de la couche de liaison du modèle OSI (« Open Systems Interconnection » en anglais), par exemple au moyen d'un protocole Ethernet, d'un commutateur réseau (ou « switch » en anglais) ou d'un protocole de communication sans-fil Wi-Fi.

Selon un exemple de réalisation, le réseau étendu 130 est un réseau WAN (« Wide Area Network » en anglais) tel qu'Internet. Selon un autre exemple, le réseau local 120 est un sous-réseau d'un autre réseau plus large, dit réseau étendu 130.

Selon un mode de réalisation particulier, la passerelle 110 est une passerelle résidentielle fournissant un accès à l'Internet aux terminaux 121 du réseau local 120.

Le réseau local 120 et le réseau étendu 130 peuvent communiquer entre eux en s'échangeant des données, sous forme de paquets, au niveau de la couche réseau du modèle OSI grâce à l'utilisation d'un protocole commun tel que le protocole IP (« Internet Protocol » en anglais). Le protocole IPv6 (version 6 de l'« Internet Protocol ») est avantageusement utilisé. Au moins une adresse IP doit donc être attribuée à chaque terminal 121 du réseau local 120 pour que ledit terminal 121 puisse communiquer dans le système de la Fig. 1.

Une manière d'attribuer une adresse IP à un terminal 121 est d'utiliser un procédé d'autoconfiguration, tel que décrit par le document normatif RFC 4862 (RFC pour « Request For Comments » en anglais). Un terminal 121b qui ne possède pas d'adresse IP peut donc effectuer ledit procédé d'autoconfiguration pour s'assigner au moins une adresse IP. Selon un mode de réalisation particulier, un terminal 121 peut s'assigner trois adresses IP distinctes, chacune desdites trois adresses IP appartenant à une classe d'adresses différente et chaque classe d'adresses ayant une portée de routage différente. En outre, chaque adresse IP attribuée à un terminal 121 doit être unique dans son contexte d'utilisation, autrement dit dans la portée de routage de ladite adresse IP. Ainsi, une adresse IP peut être attribuée à un terminal seulement si aucun autre terminal situé à portée de ladite adresse IP n'utilise l'adresse IP en question, autrement dit si ladite adresse IP n'est attribuée à aucun autre terminal. Par exemple, pour une classe d'adresses dont la portée s'étend uniquement au réseau local 120, l'adresse IP attribuée à un terminal 121 du réseau local 120 est distincte des adresses IP attribuées aux autres terminaux 121 dudit réseau local 120.

Plus particulièrement, la première classe d'adresses est une adresse locale de liaison, dite adresse LLA (LLA pour « Link Local Address » en anglais) qui permet de communiquer uniquement avec des voisins directs, sans sauts ni relais (e.g., par une transmission radio directe lorsque le réseau local 120 est un réseau local sans-fil WLAN (« Wireless LAN » en anglais). L'adresse LLA est attribuée uniquement par autoconfiguration ou par allocation statique. L'adresse LLA n'est pas routable, mais permet de communiquer avec un voisinage réseau et obtenir dudit voisinage réseau des informations de routage (découverte de routeurs...). Pour garantir que chaque adresse LLA attribuée est unique, un procédé de vérification de disponibilité d'adresse IP est implémenté tel que le mécanisme DAD (DAD pour « Duplicate Address Détection » en anglais) défini par le document normatif RFC 4862.

La deuxième classe d'adresses est une adresse privée, dite adresse ULA (ULA pour « Unique Local Address » en anglais). L'adresse ULA est routable uniquement dans le réseau local 120 et permet à un terminal 121 de communiquer dans le cadre dudit réseau local 120. La portée de routage d'une adresse ULA s'étend ainsi au réseau local 120. L'attribution d'une adresse ULA peut se faire soit par autoconfiguration, soit par un serveur dit serveur DHCP (DHCP pour « Dynamic Host Configuration Protocol » en anglais). Dans le cas d'une attribution par le serveur DHCP, l'unicité d'une adresse ULA est garantie par ledit serveur DHCP. Dans le cas d'une attribution par autoconfiguration, un préfixe IP dédié est fourni par la passerelle 110 et le procédé de vérification de disponibilité d'adresse IP est ensuite implémenté pour assurer l'unicité de chaque adresse ULA attribuée, tel que le mécanisme DAD, comme déjà évoqué vis-à-vis des adresses LLA.

La troisième classe d'adresse est une adresse globale, dite adresse GUA (GUA pour « Global Unicast Address » en anglais). L'adresse GUA est routable globalement. Autrement dit, la portée de routage d'une adresse GUA s'étend au réseau local 120 et au réseau étendu 130. L'adresse GUA est par exemple utilisée pour communiquer dans l'Internet. Comme pour une adresse ULA, l'attribution d'une adresse GUA peut être effectuée par un serveur DHCP qui garantit l'unicité de ladite adresse GUA, ou par autoconfiguration. Dans le cas de l'autoconfiguration, l'unicité de l'adresse GUA est garantie par la diffusion d'un préfixe IP unique par réseau et par l'implémentation du procédé de vérification de disponibilité d'adresse IP, tel que le mécanisme DAD, comme déjà évoqué vis-à-vis des adresses LLA.

En outre, des adresses IP de diffusion sont utilisées dans le réseau local 120. Une première adresse IP de diffusion est une adresse de diffusion globale (ou « broadcast » en anglais), appelée « all-nodes multicast », utilisée pour envoyer des messages à destination de chaque terminal 121 du réseau local 120. Ainsi, chaque terminal 121 réceptionne chaque message envoyé à ladite adresse de diffusion globale. Dans le cadre du protocole IPv6, l'adresse de diffusion globale s'écrit ff02:: 1.

D'autres adresses IP de diffusion sont des adresses de multidiffusion (ou « multicast » en anglais), appelées « solicited-node multicast ». Chaque adresse de multidiffusion est utilisée pour envoyer des messages à destination d'un ensemble prédéfini de terminaux 121 du réseau local 120. Chaque terminal 121 d'un ensemble prédéfini de terminaux 121 (dont la constitution est expliquée ci-après) doit s'abonner à l'adresse de multidiffusion associée audit ensemble prédéfini de terminaux 121. Ainsi, chaque terminal 121 dudit ensemble prédéfini de terminaux 121 réceptionne chaque message envoyé à ladite adresse de multidiffusion. Les adresses de multidiffusion permettent de communiquer avec plusieurs terminaux 121 à la fois sans toutefois faire appel à l'adresse de diffusion globale, afin de limiter le trafic.

Une adresse de multidiffusion est construite en prenant un préfixe prédéfini et en y ajoutant les *n* derniers bits de l'adresse IP du au moins un terminal 121 auquel l'adresse de diffusion est associée, *n* étant un entier prédéfini, typiquement *n*=24. Par exemple, dans le cadre du protocole IPv6, le préfixe prédéfini utilisé est de 104 bits et s'écrit ff02:0:0:0:0:l:ff00::/104, et l'adresse de multidiffusion auquel un terminal 121 s'abonne est construite en y ajoutant les 24 derniers bits de l'adresse IP du terminal 121 en question. Ainsi, tous les terminaux 121 dont l'adresse IP se termine par les mêmes 24 derniers bits appartiennent au même ensemble prédéfini de terminaux 121 et reçoivent chaque message envoyé à destination de la même adresse de multidiffusion. A chaque adresse IP correspond une adresse de multidiffusion, quelle que soit la classe d'adresses à laquelle appartient l'adresse IP. Par exemple, dans un mode de réalisation, si un terminal 121 se voit attribuer une adresse LLA, une adresse ULA et une adresse GUA, ledit terminal 121 s'abonne à trois adresses de multidiffusion distinctes correspondant chacune respectivement à son adresse LLA, à son adresse ULA et à son adresse GUA.

La Fig. 2 illustre schématiquement le procédé d'autoconfiguration pour trois adresses IP, de portée de communication distincte (LLA, ULA, GUA), pour un même terminal 121. Le principe décrit peut s'appliquer pour une quantité d'adresses IP, de portée de communication (*i.e.*, de routage) distincte, différente. Le principe décrit peut notamment s'appliquer pour l'attribution d'une seule adresse IP.

Le principe du procédé d'autoconfiguration est de sélectionner une adresse IP, de vérifier que l'adresse IP est disponible, autrement dit de s'assurer qu'aucun autre terminal n'utilise de manière concurrente ladite adresse IP, et, si l'adresse IP est disponible, de s'assigner ladite adresse IP. La sélection de l'adresse IP est effectuée conformément à un format prédéfini, et peut nécessiter ou non, selon la classe d'adresses considérée, un préfixe d'adresse prédéfini fourni par un routeur. Le principe du procédé d'autoconfiguration peut ainsi être effectué par un terminal 121 autant de fois que ledit terminal 121 souhaite s'assigner d'adresses IP différentes, chaque adresse IP étant de portée de communication (*i.e.,* de routage) distincte. Le terminal 121 comprend parfois plusieurs interfaces de communication, chacune pouvant disposer d'adresses IP obtenues par le procédé d'autoconfiguration.

Dans une première étape 200, le terminal 121b sélectionne une adresse LLA. Autrement dit, le terminal 121b choisit une adresse LLA conformément à un format prédéfini, par exemple de manière arbitraire ou, selon un autre exemple, en dérivant l'adresse LLA de son adresse MAC (« Medium Access Control » en anglais) en appliquant une règle de transformation prédéfinie.

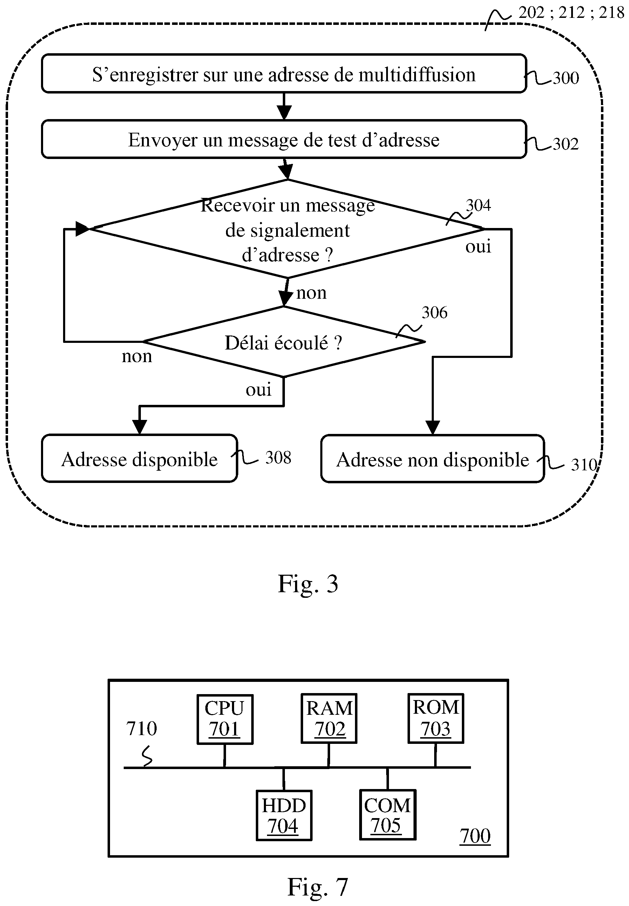

Dans une étape 202 suivante, le terminal 121b vérifie si l'adresse LLA sélectionnée est disponible dans son voisinage réseau. Pour cela, le terminal 121b effectue le procédé de vérification de disponibilité d'adresse IP tel que décrit ci-après en relation avec la Fig. 3, permettant de tester si l'adresse LLA sélectionnée est disponible et donc utilisable par le terminal 121b ou si l'adresse LLA sélectionnée est déjà attribuée à un autre terminal 121 et donc non utilisable par le terminal 121b. Le procédé de vérification de disponibilité d'adresse IP permet ainsi de garantir l'unicité de l'adresse LLA dans le voisinage réseau du terminal 121b. Si l'adresse LLA sélectionnée n'est pas disponible, le terminal 121b effectue à nouveau l'étape 200 dans laquelle le terminal 121b sélectionne une autre adresse LLA. Si l'adresse LLA sélectionnée est disponible, le terminal 121b effectue une étape 204.

A l'étape 204, le terminal 121b s'assigne l'adresse LLA sélectionnée disponible.

Dans une étape 206 suivante, le terminal 121b communique dans son voisinage réseau grâce à son adresse LLA et envoie alors un message RS (RS pour « router solicitation » en anglais) de sollicitation routeur, ledit message RS de sollicitation routeur permettant de rechercher un routeur dans le voisinage réseau du terminal 121b et d'obtenir dudit routeur des informations nécessaires à l'autoconfiguration d'au moins une adresse IP de plus grande portée de communication (*i.e.*, de routage, ici des adresses ULA et GUA).

Considérons que la passerelle 110, qui inclut un tel routeur, reçoit le message RS de sollicitation routeur transmis à l'étape 206 et y répond par un message RA (RA pour « router advertisement » en anglais) de signalement routeur.

Dans une étape 208 suivante, le terminal 121b reçoit alors, en provenance de la passerelle 110, le message RA de signalement routeur, comportant les informations nécessaires à l'autoconfiguration d'adresses ULA et GUA, telles qu'un préfixe d'adresse ULA et un préfixe d'adresse GUA.

Dans une étape 210 suivante, le terminal 121b sélectionne une adresse ULA construite à partir du préfixe d'adresse ULA reçu dans le message RA de signalement routeur à l'étape 208, et d'une partie additionnelle comportant un nombre de bits prédéfini de sorte que le nombre de bits total de l'adresse ULA est conforme au format d'adresse IP. La partie additionnelle est par exemple choisie de manière arbitraire ou, selon un autre exemple, en dérivant l'adresse ULA de l'adresse MAC du terminal 121b en appliquant une règle de transformation prédéfinie.

Dans une étape 212 suivante, le terminal 121b vérifie si l'adresse ULA sélectionnée est disponible dans le réseau local 120. Pour cela, le terminal 121b effectue le procédé de vérification de disponibilité d'adresse IP décrit dans la Fig. 3, permettant de tester si l'adresse ULA sélectionnée est disponible et donc utilisable par le terminal 121b ou si l'adresse ULA sélectionnée est déjà attribuée à un autre terminal 121 et donc non utilisable par le terminal 121b. Le procédé de vérification de disponibilité d'adresse IP permet ainsi de garantir l'unicité de l'adresse ULA dans le réseau local 120. Si l'adresse ULA sélectionnée n'est pas disponible, le terminal 121b effectue à nouveau l'étape 210 dans laquelle le terminal 121b sélectionne une autre adresse ULA. Si l'adresse ULA sélectionnée est disponible, le terminal 121b effectue une étape 214.

A l'étape 214, le terminal 121b s'assigne l'adresse ULA sélectionnée disponible.

Dans une étape 216 suivante, le terminal 121b sélectionne une adresse GUA construite à partir du préfixe d'adresse GUA reçu dans le message RA de signalement routeur à l'étape 208, et d'une partie additionnelle comportant un nombre de bits prédéfini de sorte que le nombre de bits total de l'adresse GUA est conforme au format d'adresse IP. La partie additionnelle est par exemple choisie de manière arbitraire ou, selon un autre exemple, en dérivant l'adresse GUA de l'adresse MAC du terminal 121b en appliquant une règle de transformation prédéfinie.

Dans une étape 218 suivante, le terminal 121b vérifie si l'adresse GUA sélectionnée est disponible. Pour cela, le terminal 121b effectue le procédé de vérification de disponibilité d'adresse IP décrit dans la Fig. 3, permettant de tester si l'adresse GUA sélectionnée est disponible et donc utilisable par le terminal 121b ou si l'adresse GUA sélectionnée est déjà attribuée à un autre terminal 121 et donc non utilisable par le terminal 121b. Le procédé de vérification de disponibilité d'adresse IP permet ainsi de garantir l'unicité de l'adresse GUA dans le système de la Fig. 1, c'est-à-dire dans le réseau local 120 et dans le réseau étendu 130. Si l'adresse GUA sélectionnée n'est pas disponible, le terminal 121b effectue à nouveau l'étape 216 dans laquelle le terminal 121b sélectionne une autre adresse GUA. Si l'adresse GUA sélectionnée est disponible, le terminal 121b effectue une étape 220.

A l'étape 220, le terminal 121b s'assigne l'adresse GUA sélectionnée disponible.

La Fig. 3 illustre schématiquement le procédé de vérification de disponibilité d'une adresse IP sélectionnée, selon un mode de réalisation. Le procédé de vérification de disponibilité d'adresse IP, tel que par exemple le mécanisme DAD défini par le document normatif RFC 4862, peut être effectué à plusieurs reprises dans le procédé d'autoconfiguration d'un terminal, de sorte à obtenir des adresses IP de portée de communication (*i.e.,* de routage) distinctes. En référence à la Fig. 2, le procédé de vérification de disponibilité d'adresse IP est effectué lors de l'étape 202 (adresse LLA), de l'étape 212 (adresse ULA) et de l'étape 218 (adresse GUA).

Dans une étape 300, le terminal 121b s'abonne à l'adresse de multidiffusion associée à l'adresse IP sélectionnée. L'adresse IP sélectionnée correspond à l'adresse LLA sélectionnée, à l'adresse ULA sélectionnée ou à l'adresse GUA sélectionnée lors des étapes respectives 202, 212 ou 218. En outre, le terminal 121b peut optionnellement s'enregistrer sur l'adresse de diffusion globale du réseau local 120.

Dans une étape 302 suivante, le terminal 121b envoie, à destination de l'adresse de multidiffusion, un message NS (NS pour « neighbour solicitation » en anglais) de test d'adresse, tel que défini par exemple par le document normatif RFC 4861. Alternativement, le terminal 121b envoie ledit message NS de test d'adresse à destination de l'adresse de diffusion globale. Ledit message NS de test d'adresse comporte une adresse IP source qui est nulle puisqu'aucune adresse IP n'est encore effectivement attribuée au terminal 121b. Un message NS de test d'adresse cible une adresse IP, dite adresse IP cible, indiquée dans un champ de données du message NS, autrement dit vise à rechercher si ladite adresse IP cible est déjà attribuée à un autre terminal 121. Le message NS de test d'adresse comporte ainsi un champ de données contenant l'adresse IP cible. Un terminal 121 auquel ladite adresse IP cible a été attribuée (par exemple, autoattribuée) et qui reçoit ledit message NS de test d'adresse doit alors signaler sa présence en envoyant en retour un message NA (NA pour « Neighbour Advertisement » en anglais) de signalement d'adresse, tel que défini par exemple par le document normatif RFC 4861. Un message NA de signalement d'adresse comporte un en-tête ICMPv6 (pour « Internet Control Message Protocol version 6 » en anglais) comportant une adresse IP source, qui correspond alors à l'adresse IP cible recherchée par le message NS de test d'adresse, et une adresse IP destination qui est l'adresse de multidiffusion, alternativement l'adresse de diffusion globale, à laquelle le message NS de test d'adresse a été envoyé. Ledit en-tête ICMPv6 comporte en outre optionnellement un champ lien physique (également appelé « target link-layer » en anglais) qui comporte l'adresse MAC dudit terminal 121. Un message NA de signalement d'adresse comporte en outre un en-tête Ethernet pouvant comporter l'adresse MAC du terminal 121 émetteur dudit message NA de signalement d'adresse. L'adresse MAC dudit terminal 121 peut donc ainsi être obtenue en scrutant le contenu du message NA de signalement d'adresse en question.

Dans une étape 304 suivante, le terminal 121b vérifie s'il a reçu un message NA de signalement d'adresse en retour du message NS de test d'adresse précédemment envoyé à l'étape 302. Si un message NA de signalement d'adresse a été reçu en provenance d'un terminal 121 auquel l'adresse IP cible est attribuée, alors une étape 310 est effectuée. Sinon, une étape 306 est effectuée.

A l'étape 306, le terminal 121b vérifie si un premier délai prédéfini est écoulé depuis l'instant d'émission du message NS de test d'adresse envoyé à l'étape 302. Tant que ledit premier délai n'est pas écoulé, le terminal 121b réitère l'étape 304. Si le premier délai est écoulé, le terminal 121b effectue une étape 308.

A l'étape 308, le terminal 121b considère que l'adresse IP sélectionnée, correspondant à l'adresse IP cible, est disponible.

A l'étape 310, le terminal 121b a reçu un message NA de signalement d'adresse et considère donc que l'adresse IP sélectionnée n'est pas disponible.

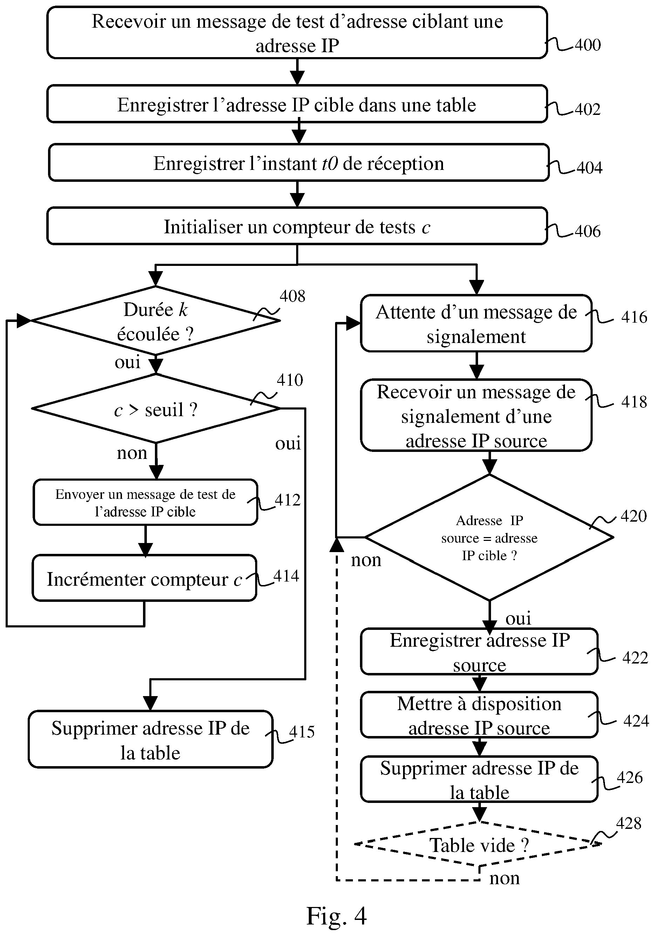

La Fig. 4 illustre schématiquement un procédé de détermination si une adresse IP est attribuée ou non à un terminal.

Lorsqu'une adresse IP est attribuée à un terminal 121 par le procédé d'autoconfiguration, la passerelle 110 n'obtient aucune indication permettant de savoir que ladite adresse IP est effectivement attribuée audit terminal 121 tant que ledit terminal 121 n'envoie pas de message. La passerelle 110 ne sait donc pas déterminer quelles adresses IP sont attribuées aux terminaux 121 du réseau local 120. La passerelle 110 pallie ce défaut grâce au procédé décrit ici en relation avec la Fig. 4.

Il convient de noter qu'il n'est pas souhaitable que la passerelle 110 s'abonne à toutes les adresses de multidiffusion existantes pour capter les messages NS et NA qui seraient transmis via ces adresses de multidiffusion, car celles-ci peuvent être trop nombreuses. Par exemple, dans le cadre du protocole IPv6, la passerelle 110 devrait s'abonner à 16 millions d'adresses de multidiffusion pour pouvoir capter les messages NS et NA qui permettraient de savoir quelles adresses IP sont sollicitées pour vérification de disponibilité et respectivement quelles adresses IP sollicitées sont en conflit. Il n'est donc pas souhaitable pour la passerelle 110 de suivre et analyser l'ensemble des messages transmis via les adresses de multidiffusion, la charge de traitement correspondante étant bien trop volumineuse. En outre, même en supposant que la passerelle 110 soit informée qu'un terminal cherche à s'attribuer une adresse IP par le procédé d'autoconfiguration, la passerelle 110 ne reçoit pas d'indication dudit terminal permettant de s'assurer que ledit procédé d'autoconfiguration avec l'adresse IP en question ait abouti.

Dans une première étape 400, la passerelle 110 reçoit un premier message NS de test d'adresse ciblant une adresse IP cible, ledit premier message NS de test pouvant être issu de l'étape 302 décrite ci-dessus. Pour recevoir ledit message NS de test d'adresse, la passerelle 110 ouvre un point de terminaison (ou « socket » en anglais) permettant de recevoir tout le trafic échangé au moyen du protocole IP (avantageusement, tout le trafic échangé au moyen du protocole IPv6) dans le réseau local 120, et génère un filtre permettant d'en extraire uniquement les messages NS de test d'adresse comportant une adresse IP source nulle. Ainsi, chaque message NS de test d'adresse comportant une adresse IP source nulle et envoyé soit sur une adresse de multidiffusion soit sur l'adresse de diffusion globale est réceptionné et filtré, et peut ainsi être analysé par la passerelle 110.

Dans une étape 402 suivante, la passerelle 110 enregistre, dans une table, une adresse IP correspondant à l'adresse IP cible obtenue dans le champ de données contenant l'adresse IP cible dudit message NS de test d'adresse reçu.

Dans une étape 404 suivante, la passerelle 110 enregistre dans la table, en association avec l'adresse IP cible obtenue, un instant t0 de réception dudit message NS de test d'adresse reçu.

Dans une étape 406 suivante, la passerelle 110 inscrit dans la table, en association avec ladite adresse IP cible obtenue, un compteur de tests c initialisé à une valeur initiale *c0*, telle que *c0* = 0. La passerelle 110 effectue ensuite en parallèle une étape 408 et une étape 416.

A l'étape 408, la passerelle 110 détermine si un second délai de durée *k* prédéfinie est écoulé, ledit second délai étant compté à partir de l'instant *t0* de réception du premier message NS de test d'adresse reçu ou à partir d'un précédent instant d'émission d'un second message NS de test d'adresse (tel que décrit ci-après). Lorsque ledit second délai de durée *k* est écoulé, la passerelle 110 valide l'étape 408 et effectue une étape 410 suivante. Autrement dit, la passerelle 110 effectue l'étape 410 à un instant *t* tel que *t = t0*+*k*(c*+*1).* La durée *k* est prédéfinie de manière à permettre à un terminal 121 effectuant le procédé d'autoconfiguration, de finaliser ledit procédé d'autoconfiguration. La durée *k* vaut par exemple 5s.

Selon un mode de réalisation, le second délai de durée *k* est déterminé à l'aide d'un minuteur pour chaque adresse IP enregistrée dans la table. Autrement dit, un nouveau minuteur de durée *k* est initialisé par la passerelle 110 pour chaque réception d'un nouveau premier message NS de test d'adresse comportant une adresse IP cible différente de toute autre adresse IP présente dans la table. Chaque minuteur est ainsi démarré par la passerelle 110 à l'instant *t0* de réception du message NS de test d'adresse reçu considéré. Pour chaque minuteur de durée *k* arrivant à échéance, la passerelle 110 réinitialise ledit minuteur de durée *k* et envoie un second message NS de test d'adresse (tel que décrit ci-après à une étape 412).

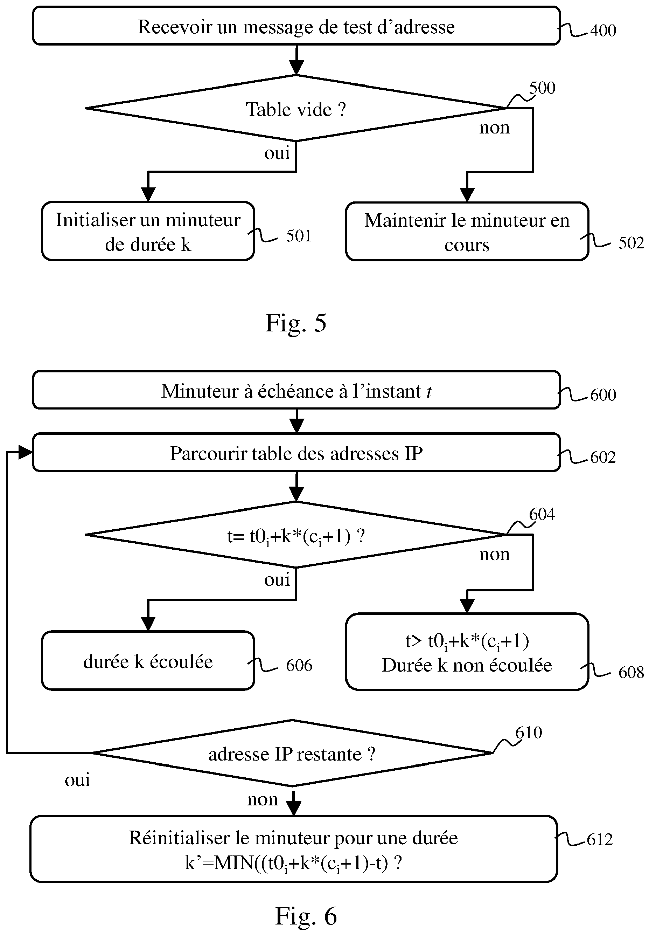

Selon un mode de réalisation alternatif, la passerelle 110 initialisé un minuteur unique pour l'ensemble des adresses IP enregistrées dans la table. La passerelle 110 effectue alors un procédé de gestion du minuteur unique, tel que décrit ci-après en relation avec les Figs. 5 et 6.

A l'étape 410, la passerelle 110 compare le compteur de tests c au seuil prédéfini, le seuil prédéfini étant par exemple égal à 2. Si le compteur de tests c n'est pas supérieur audit seuil prédéfini, une étape 412 est effectuée. Si le compteur de tests c est supérieur au seuil prédéfini, une étape 415 est effectuée.

A l'étape 412, la passerelle 110 envoie un second message NS de test d'adresse ciblant l'adresse IP enregistrée dans la table à l'étape 402. Chaque second message NS de test d'adresse est envoyé à destination de l'adresse de multidiffusion associée à ladite adresse IP enregistrée dans la table, alternativement à destination de l'adresse de diffusion globale.

En outre, le second message NS de test d'adresse envoyé comporte une adresse IP source non nulle, la passerelle 110 utilisant par exemple son adresse LLA comme adresse IP source pour envoyer des messages. Selon un autre exemple, la passerelle 110 utilise une adresse IP qui lui est attribuée et qui appartient à la même classe que l'adresse IP cible. Ainsi, ledit second message NS de test d'adresse ne peut pas être réceptionné par la passerelle 110 à l'aide du point de terminaison couplé au filtre comme évoqué à l'étape 400.

Dans une étape 414 suivante, la passerelle 110 incrémente le compteur de tests c d'une unité. L'étape 408 est ensuite réitérée. Par exemple, dans le cas où la passerelle 110 utilise un minuteur distinct pour chaque adresse IP de la table, la passerelle 110 réinitialise le minuteur de durée *k* lorsque ledit minuteur arrive à échéance et qu'un second message NS de test d'adresse est envoyé. Selon un autre exemple, la passerelle 110 réinitialise le minuteur unique, lorsque ledit minuteur unique arrive à échéance, et pour une durée *k'* telle que définie en relation avec une étape 612 de la Fig. 6.

A l'étape 415, la passerelle 110 considère que l'adresse IP enregistrée dans la table à l'étape 402 n'a pas été attribuée et supprime ladite adresse IP de la table ainsi que les informations qui y ont été enregistrées en association avec ladite adresse IP. En effet, une situation où le compteur de test *c* est supérieur au seuil prédéfini peut être représentative que l'adresse IP du premier message NS de test reçu à l'étape 400 n'a pas été retenue par le terminal 121 émetteur dudit premier message NS.

A l'étape 416, la passerelle 110 se met en attente de réception d'un message NA de signalement d'adresse. Pour cela, la passerelle 110 ouvre un autre point de terminaison permettant de recevoir chaque message NA de signalement d'adresse envoyé via l'adresse de multidiffusion qui correspond à l'adresse IP cible du message NS envoyé à l'étape 412.

Dans une étape 418 suivante, la passerelle 110 reçoit un message NA de signalement d'adresse et en obtient l'adresse IP source.

Dans une étape 420 suivante, la passerelle 110 détermine si le message NA de signalement d'adresse est reçu en retour d'un second message NS de test d'adresse envoyé. La passerelle compare l'adresse IP source du message NA de signalement d'adresse reçu à chaque adresse IP enregistrée dans la table. Si ladite adresse IP source correspond à l'une desdites adresses IP enregistrées dans la table, ladite adresse IP est attribuée à un terminal et la passerelle 110 effectue une étape 422. Sinon, la passerelle 110 réitère l'étape 416.

A l'étape 422, la passerelle 110 obtient ladite adresse IP et l'enregistre comme étant une adresse IP attribuée à un terminal 121. Par exemple, la passerelle 110 enregistre l'adresse IP en question dans une table de voisinage qui énumère les adresses IP des terminaux 121 du réseau local 120 vues par la passerelle 110. La table de voisinage comporte une entrée par adresse IP quelle que soit la classe de ladite adresse IP. Par exemple, si une adresse LLA, une adresse ULA et une adresse GUA sont attribuées à un terminal 121, la table de voisinage comporte trois entrées distinctes correspondant chacune aux adresses respectives LLA, ULA et GUA. La table de voisinage comporte en outre préférentiellement l'adresse MAC associée pour chaque adresse IP, lorsque ladite adresse MAC est connue. La table de voisinage permet alors de connaître l'adresse MAC associée à ladite adresse IP. Par exemple, la passerelle 110 obtient ladite adresse MAC dans l'en-tête Ethernet ou dans le champ lien physique optionnel de l'en-tête ICMPv6 du message NA de signalement d'adresse. Si l'adresse MAC du terminal 121 utilisant ladite adresse IP attribuée est obtenue, la passerelle 110 peut alors enregistrer ladite adresse MAC en association avec l'adresse IP attribuée. Selon un mode de réalisation, l'adresse IP attribuée peut être enregistrée automatiquement dans la table de voisinage de la passerelle 110 par un module de système d'exploitation de la passerelle 110. Selon un autre mode de réalisation, l'adresse IP attribuée est enregistrée grâce à l'exécution, par la passerelle 110, d'une fonction applicative permettant de mettre à jour la table de voisinage.

Notons que dans un cas où ladite adresse IP est déjà connue par la passerelle 110 comme étant attribuée à un terminal 121, la passerelle 110 n'enregistre pas une deuxième fois ladite adresse IP. Cela peut être le cas par exemple lorsqu'un terminal 121b envoie un premier message NS de test d'adresse ciblant une adresse IP cible déjà attribuée à un autre terminal 121.

La passerelle 110 effectue ensuite une étape 424.

A l'étape 424, la passerelle 110 met ladite adresse IP attribuée à disposition de services internes ou externes à la passerelle 120 afin que les services puissent utiliser ladite adresse IP.

Selon un premier exemple, la passerelle 110 utilise un bus de communication pour communiquer l'adresse IP attribuée. Le bus de communication peut être un bus matériel ou un bus logiciel comme divulgué dans la demande internationale de brevet WO 2013/087894 A1. Par exemple, des services internes à la passerelle 110 s'enregistrent auprès d'un agent de messages (« Message Broker » en anglais), afin de recevoir des notifications représentatives de mises à jour de la table de voisinage et sont ainsi informés de l'existence de ladite adresse IP attribuée. Plus généralement, la passerelle 110 peut utiliser une interface de communication, matérielle ou logicielle telle qu'une interface de programmation applicative API (« Application Programming Interface » en anglais), pour communiquer l'adresse IP attribuée.

Selon un second exemple, la passerelle 110 affiche dans une interface utilisateur graphique GUI (« Graphical User Interface » en anglais) ladite adresse IP attribuée, par exemple dans le cadre d'un affichage du contenu de la table de voisinage. Pour ce faire, la passerelle intègre un afficheur, tel qu'un écran LCD (« Liquid Crystal Display » en anglais. La passerelle 110 peut aussi transmettre ladite adresse IP attribuée, par exemple en transmettant l'ensemble de la table de voisinage, à un dispositif externe (par exemple, un téléphone intelligent (« smartphone » en anglais) pour affichage sur un écran dudit dispositif externe.

Selon un troisième exemple, la passerelle 110 met ladite adresse IP attribuée à disposition d'un pare-feu, préférentiellement interne à ladite passerelle 110. Le pare-feu configure ensuite une règle de pare-feu pour le terminal 121 utilisant l'adresse IP attribuée. La passerelle 110 détermine si ledit terminal 121 nécessite une ouverture d'un pare-feu et génère une règle d'ouverture du pare-feu (ou « pinholing » en anglais) si c'est le cas. Par exemple, l'ouverture de pare-feu fait suite à une configuration utilisateur (e.g., via une application ou une interface graphique) afin de laisser passer du trafic HTTP (« Hypertext Transfer Protocol » en anglais) ou HTTPS (« HTTP Secure » en anglais) en provenance du réseau étendu 130 vers un terminal 121 du réseau local 120 qui héberge un serveur. L'utilisateur sélectionne le terminal 121 en fonction typiquement de son adresse MAC, ou d'un nom d'hôte (« hostname » en anglais) correspondant, mais la configuration du pare-feu repose sur l'adresse IP applicable. La passerelle 110 génère alors une règle d'ouverture du pare-feu spécifique autorisant le passage du trafic en question depuis le réseau étendu 130 vers le réseau local 120. Par exemple, la passerelle 110 génère une règle d'ouverture du pare-feu spécifique aux serveurs web ou aux serveurs de courriels.

Selon un quatrième exemple, la passerelle 110 met ladite adresse IP attribuée à disposition d'un contrôleur, préférentiellement interne à ladite passerelle 110, d'un réseau de communication sans fil maillé comportant une pluralité de points d'accès gérant chacun un réseau sans fil. Ledit contrôleur peut ainsi transmettre une commande de configuration à un terminal 121 auquel est attribuée ladite adresse IP même si ledit terminal 121 n'a pas encore émis de trafic avec son adresse IP nouvellement attribuée.

Une étape 426 est ensuite effectuée.

A l'étape 426, ladite adresse IP est supprimée de la table ainsi que les informations qui y ont été enregistrées en association avec ladite adresse IP.

Selon un mode de réalisation particulier, à l'étape 420, la passerelle 110 parcourt la table afin d'identifier si l'adresse IP source du message NA de signalement d'adresse reçu à l'étape 418 correspond à une adresse IP enregistrée dans la table. Si ladite adresse IP ne correspond à aucune adresse IP enregistrée dans la table, la passerelle 110 ignore le message NA de signalement d'adresse et réitère l'étape 416. Sinon, la passerelle 110 effectue alors les étapes 422, 424 et 426 déjà décrites. La passerelle 110 effectue ensuite une étape 428 dans laquelle elle détermine si la table est vide. Si la table n'est pas vide, la passerelle 110 réitère l'étape 416.

De manière générale, pour déterminer si une adresse IP est attribuée ou non à un terminal 121 qui implémente le procédé d'autoconfiguration, la passerelle 110 détecte dans un premier temps toute adresse IP cible qu'un terminal 121 cherche à s'assigner. La passerelle 110 détecte pour cela l'adresse IP cible de chaque premier message NS de test d'adresse reçu, ledit premier message NS de test d'adresse requérant à tout terminal utilisant ladite adresse IP cible de s'identifier en envoyant un message NA de signalement d'adresse. Un tel premier message NS de test d'adresse comporte une adresse IP source nulle. Ainsi, la passerelle 110 peut aisément repérer (par filtrage d'adresse source) qu'un terminal est en cours de réalisation du procédé d'autoconfiguration et détecter l'adresse IP que le terminal 121 souhaite s'assigner.

Dans un second temps, la passerelle 110 teste elle-même l'adresse IP cible afin de déterminer si ladite adresse IP cible est effectivement attribuée. Pour cela, la passerelle 110 envoie à son tour au moins un second message NS de test d'adresse ciblant ladite adresse IP cible.

La passerelle 110 détecte alors si un message NA de signalement d'adresse est reçu en réponse au second message NS de test d'adresse envoyé, autrement dit si un message NA de signalement d'adresse comportant pour adresse IP source ladite adresse IP cible testée est reçu dans un délai de durée *k* prédéfinie suivant l'envoi dudit second message NS de test d'adresse. Si c'est le cas, la passerelle 110 détermine que l'adresse IP cible est attribuée à un terminal. La passerelle 110 obtient alors ladite adresse IP cible et l'enregistre dans la table de voisinage. Si aucun message NA de signalement d'adresse comportant pour adresse IP source ladite adresse IP cible testée n'est reçu et qu'un nombre de seconds messages NS de test d'adresse ciblant ladite adresse IP cible envoyé dépasse un seuil prédéfini, la passerelle 110 détermine que l'adresse IP cible n'est pas attribuée.

La Fig. 5 illustre schématiquement une première phase du procédé de gestion d'un minuteur unique permettant de mesurer le second délai de durée *k* pour l'ensemble des adresses IP de la table, selon un mode de réalisation. Le procédé est effectué par la passerelle 110.

Dans une première étape 400, décrite à la Fig. 4, la passerelle 110 reçoit un message NS de test d'adresse comportant une adresse IP cible.

Dans une étape 500 suivante, la passerelle 110 détermine si la table est vide au moment de ladite réception dudit message NS de test d'adresse. Si c'est le cas, une étape 501 est effectuée. Sinon, une étape 502 est effectuée.

A l'étape 501, la passerelle 110 démarre le minuteur unique pour une durée *k.*

A l'étape 502, le minuteur unique est déjà démarré et reste valide. La passerelle 110 maintient donc l'échéance du minuteur unique telle qu'initialisée. Autrement dit, la passerelle ne modifie pas le minuteur unique.

Par exemple, pour une première adresse IP de la table ayant pour instant de réception d'un premier message NS de test d'adresse reçu *t0₁* = 120s et un compteur de tests *c₁* associé, la table est vide lors de la réception dudit premier message NS de test d'adresse, et le minuteur unique est alors initialisé pour une durée *k*=5s. Lorsqu'un autre premier message NS de test d'adresse ciblant une adresse IP cible correspondant à une deuxième adresse IP est reçu à *t0₂* = 122s, la table n'est pas vide et le minuteur reste inchangé.

La Fig. 6 illustre schématiquement une seconde phase du procédé de gestion du minuteur unique permettant de mesurer le second délai de durée *k* pour l'ensemble des adresses IP de la table, selon un mode de réalisation.

Dans une première étape 600, la passerelle 110 détecte que le minuteur unique arrive à échéance, à un instant *t*.

Dans une étape suivante 602, la passerelle 110 parcourt la table des adresses IP et sélectionne une adresse IP de ladite table. Par exemple, la passerelle 110 sélectionne une adresse IP de rang *i=m, m* étant un compteur initialisé à 1. La passerelle incrémente ensuite le compteur *m* d'une unité de sorte que, si l'étape 602 est ultérieurement effectuée à nouveau, la passerelle 110 sélectionne l'adresse test de rang suivant *i*+1.

Dans une étape 604, la passerelle 110 détermine si l'instant *t* correspond, pour l'adresse IP sélectionnée, autrement dit pour l'adresse IP de rang *i* de la table, à un instant *t0ᵢ*+*k***(cᵢ*+*1)*, *t0ᵢ* étant l'instant de réception du premier message NS de test d'adresse ciblant l'adresse IP de rang *i,* et *cᵢ* étant le compteur de tests enregistré en association avec l'adresse IP de rang *i.* Si c'est le cas, une étape 606 est effectuée. Sinon, une étape 608 est effectuée.

A l'étape 606, la passerelle 110 considère que, pour l'adresse IP sélectionnée, le second délai de durée *k* est écoulé. La passerelle 110 peut alors valider l'étape 408 du procédé de détermination si une adresse IP est attribuée ou non à un terminal et effectuer l'étape 410. La passerelle 110 effectue ensuite une étape 610.

A l'étape 608, l'instant t est supérieur à *t0ᵢ*+*k***(cᵢ*+*1)* pour l'adresse IP sélectionnée, de rang *i.* La passerelle 110 considère alors que le second délai n'est pas écoulé et ne peut pas valider, pour l'adresse IP sélectionnée, l'étape 408 du procédé de détermination si une adresse IP est attribuée ou non à un terminal. La passerelle 110 effectue ensuite l'étape 610.

A l'étape 610, la passerelle 110 vérifie s'il existe au moins une adresse IP dans la table qui n'a pas encore été sélectionnée. Si c'est le cas, la passerelle 110 réitère l'étape 602 afin de sélectionner une nouvelle adresse IP dans la table. Sinon, la passerelle 110 effectue l'étape 612.

A l'étape 612, la passerelle réinitialise le minuteur unique pour la durée *k'* calculée en prenant compte l'ensemble des adresses IP de la table. La durée *k'* est calculée comme le minimum des durées *kᵢ*=*(t0ᵢ*+*k***(cᵢ*+*1))-t.*

Par exemple, en considérant la première adresse IP de la table, de rang 1, ayant pour instant de réception du premier message NS de test d'adresse *t0₁* = 120s et un compteur de tests *ci* associé et la deuxième adresse IP de la table, de rang 2, ayant pour instant de réception du message NS de test d'adresse *t0₂* = 122s et un compteur de tests *c*₂, le minuteur unique est d'abord initialisé pour la durée *k =* 5s à *t0₁* = 120s. Lorsque le minuteur arrive une première fois à échéance, à *t* = 125s, la passerelle 110 sélectionne d'abord la première adresse IP de la table. Dans ce cas, *t =* 125s = *t0₁*+*k***(c₁*+*1).* La durée *k* est donc écoulée pour la première adresse IP de la table, pour laquelle l'étape 408 est validée, et le compteur de tests *ci* est incrémenté d'une unité. La passerelle 110 sélectionne ensuite la deuxième adresse IP de la table. Dans ce cas, *t* = 125s est supérieur à *t0₂*+*k***(c₂*+*1)* = 122, l'étape 408 n'est pas validée pour ladite deuxième adresse IP. Considérant que la totalité des adresses IP de la table ayant été traitée, le minuteur est réinitialisé pour une durée *k' = MIN ((t0ᵢ*+*k*(cᵢ*+*1))-t),* soit pour une durée de *k' =* 2s. Lorsque le minuteur arrive une deuxième fois à échéance, à *t* = 127s, l'instant *t* est tel que, pour la première adresse IP de la table, *t > t0₁*+*k***(cᵢ*+*1)* = 130s, donc l'étape 408 n'est pas validée pour ladite première adresse IP. Pour la deuxième adresse IP de la table, *t = t0₂*+*k***(c₂*+*1)* donc l'étape 408 est validée pour ladite deuxième adresse IP et le compteur de tests *c*₂ est incrémenté d'une unité.

La Fig. 7 illustre schématiquement une architecture matérielle d'une unité de contrôle 700 de la passerelle 110 ou d'un terminal 121, selon un mode de réalisation.

L'unité de contrôle 700 comporte alors, reliés par un bus de communication 710 ; un processeur ou CPU (« Central Processing Unit » en anglais) 701 ; une mémoire vive RAM 702 ; une mémoire morte ROM (« Read Only Memory » en anglais) 703 ; une unité de stockage 704, telle qu'un disque dur HDD (« Hard Disk Drive » en anglais), ou un lecteur de support de stockage, tel qu'un lecteur de cartes SD (« Secure Digital » en anglais) ; et une interface COM 705 permettant de communiquer avec des périphériques réseaux.

Le processeur CPU 701 est capable d'exécuter des instructions chargées dans la RAM 702 à partir de la ROM 703, d'une mémoire externe (telle qu'une carte SD), d'un support de stockage, ou d'un réseau de communication. Lorsque l'unité de contrôle 700 est mise sous tension, le processeur CPU 701 est capable de lire de la RAM 702 des instructions et de les exécuter. Ces instructions forment un programme d'ordinateur causant l'implémentation, par le processeur CPU 701, de tout ou partie des étapes décrites ici en relation avec la passerelle 110 ou avec le terminal 121 pour l'unité de contrôle de la passerelle 110 ou l'unité de contrôle du terminal 121 respectivement.

Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, la passerelle 110 et/ou tout terminal 121 comporte de la circuiterie électronique adaptée et configurée pour implémenter les étapes décrites ici en relation avec la passerelle 110 et/ou un dit terminal 121 respectivement.

## Revendications

1. Procédé de détermination si une adresse IP est attribuée dans un réseau de communication (120) comportant au moins une passerelle (110), ledit procédé étant réalisé par la passerelle (110) et **caractérisé en ce qu'**il comporte :
- configurer un filtre permettant de recevoir (400) des premiers messages de test d'adresse, chaque premier message de test d'adresse filtré ciblant une adresse IP, dite adresse IP cible, et requérant à tout terminal (121) auquel est attribuée l'adresse IP cible et recevant ledit premier message de test d'adresse d'envoyer un message de signalement d'adresse,
- sur réception d'un dit premier message de test d'adresse filtré, envoyer (412) au moins un second message de test d'adresse ciblant ladite adresse IP cible,
- déterminer (422) que l'adresse IP cible est attribuée à un terminal (121) si un message de signalement d'adresse ayant ladite adresse IP cible pour adresse IP source (420) est reçu, et
- déterminer (415) que l'adresse IP cible n'est pas attribuée à un terminal (121) si aucun message de signalement d'adresse ayant ladite adresse IP cible pour adresse IP source n'est reçu lorsqu'un nombre de seconds messages de test d'adresse ciblant ladite adresse IP cible qui ont été envoyés par ladite passerelle (110) dépasse un seuil prédéfini.

2. Procédé selon la revendication 1, dans lequel chaque second message de test d'adresse est envoyé à destination d'une adresse de diffusion globale, chaque terminal (121) du réseau de communication (120) recevant chaque message envoyé à ladite adresse de diffusion globale.

3. Procédé selon la revendication 1, dans lequel chaque message de test d'adresse est envoyé à destination d'une adresse de multidiffusion, ladite adresse de multidiffusion étant définie par un préfixe prédéfini et par les *n* derniers bits de l'adresse IP cible, *n* étant un entier prédéfini, chaque terminal (121) du réseau de communication (120) dont l'adresse IP se termine par lesdits *n* derniers bits étant supposé être abonné à ladite adresse de multidiffusion afin de recevoir chaque message envoyé à ladite adresse de multidiffusion.

4. Procédé selon l'une quelconque des revendications 1 à 3, dans lequel un envoi de second message de test d'adresse ciblant ladite adresse IP cible est temporellement séparé (408) d'un précédent envoi de second message de test d'adresse ciblant ladite adresse IP cible par un délai de durée *k* prédéfinie.

5. Procédé selon la revendication 4, dans lequel chaque envoi de second message de test d'adresse ciblant l'adresse IP cible est effectué à un instant *t* tel que *t = t0ᵢ*+*k***(cᵢ*+*1), t0ᵢ* étant l'instant de réception du premier message de test d'adresse ciblant ladite adresse IP cible et *cᵢ* étant un compteur de tests associé à ladite adresse IP cible, le procédé comportant en outre :
- sur réception d'un dit premier message de test d'adresse filtré, enregistrer ladite adresse IP cible dans une table en association avec l'instant *t0ᵢ* de réception dudit premier message de test d'adresse (404) et avec le compteur de tests *cᵢ* initialisé à zéro (406), où *i* représente un index d'entrée de la table,
- incrémenter (414) le compteur de tests *cᵢ* d'une unité à chaque envoi d'un dit second message de test d'adresse ciblant ladite adresse IP cible,
- supprimer (426, 415) l'adresse IP cible de la table si un message de signalement d'adresse ayant ladite adresse IP cible pour adresse IP source est reçu (420), ou lorsque le nombre de seconds messages de test d'adresse ciblant ladite adresse IP cible qui ont été envoyés par la passerelle (110), sans message de signalement d'adresse reçu en retour, dépasse le seuil prédéfini (410).

6. Procédé selon l'une des revendications 1 à 5, comportant en outre, pour chaque premier message de test d'adresse ciblant une adresse IP cible filtré reçu, d'initialiser un minuteur de durée prédéfinie *k* à l'instant *t0ᵢ* de réception du premier message de test d'adresse, et dans lequel chaque envoi de second message de test d'adresse ciblant ladite adresse IP cible est effectué lorsque le minuteur arrive à échéance, le procédé comportant en outre de réinitialiser ledit minuteur de la durée *k* à chaque envoi par la passerelle (110) d'un dit second message de test d'adresse ciblant ladite adresse IP cible si le nombre de seconds messages de test d'adresse ciblant ladite adresse IP cible qui ont été envoyés par ladite passerelle (110) est inférieur au seuil prédéfini.

7. Procédé selon la revendication 5, comportant en outre, pour chaque adresse cible enregistrée dans la table :
- initialiser (501) un minuteur de durée prédéfinie *k* à l'instant *t0ᵢ* de réception d'un dit premier message de test d'adresse ciblant ladite adresse IP cible seulement si la table est vide (500) à la réception (400) dudit premier message de test d'adresse,
- envoyer (606, 412) un dit second message de test d'adresse ciblant ladite adresse IP cible seulement si le minuteur arrive à échéance à l'instant *t* tel que *t = t0ᵢ*+*k*(cᵢ*+*1)*,
le procédé comportant en outre, pour l'ensemble des adresses IP cibles d'index i de la table :
- réinitialiser (612) le minuteur pour une durée *k'* telle que *k'* = *MIN((t0ᵢ*+*k***(cᵢ*+*1)-t)* lorsque le minuteur arrive à échéance.

8. Procédé selon l'une des revendications 1 à 7, comportant en outre d'enregistrer (422) dans la passerelle (110) chaque adresse IP cible déterminée comme étant attribuée à un terminal (121).

9. Procédé selon la revendication précédente, comportant en outre de compléter (424) une table de voisinage avec ladite adresse IP cible déterminée comme étant attribuée à un terminal (121).

10. Procédé selon l'une des revendications 8 ou 9, dans lequel enregistrer dans la passerelle (110) l'adresse IP cible déterminée comme étant attribuée à un terminal (121) comporte d'obtenir, dans le message de signalement d'adresse ayant ladite adresse IP cible pour adresse IP source qui a été reçu, une adresse MAC dudit terminal (121), le procédé comportant en outre de de générer (424) une règle d'ouverture de pare-feu associée audit terminal (121) identifié par son adresse MAC.

11. Passerelle (110) configurée pour déterminer si une adresse IP est attribuée dans un réseau de communication (120) comportant ladite passerelle (110), la passerelle (110) comportant :
- des moyens pour configurer un filtre permettant de recevoir (400) des premiers messages de test d'adresse, chaque premier message de test d'adresse filtré ciblant une adresse IP, dite adresse IP cible, et requérant à tout terminal (121) auquel est attribuée l'adresse IP cible et recevant ledit premier message de test d'adresse d'envoyer un message de signalement d'adresse,
- des moyens pour envoyer (412), sur réception d'un dit premier message de test d'adresse filtré, au moins un second message de test d'adresse ciblant ladite adresse IP cible,
- des moyens pour déterminer (422) que l'adresse IP cible est attribuée à un terminal (121) si un message de signalement d'adresse ayant ladite adresse IP cible pour adresse IP source (420) est reçu, et
- des moyens pour déterminer (415) que l'adresse IP cible n'est pas attribuée à un terminal (121) si aucun message de signalement d'adresse ayant ladite adresse IP cible pour adresse IP source n'est reçu lorsqu'un nombre de seconds messages de test d'adresse ciblant ladite adresse IP cible qui ont été envoyés par ladite passerelle (110) dépasse un seuil prédéfini.

12. Un programme d'ordinateur, **caractérisé en ce qu'**il comprend des instructions pour implémenter, par un processeur, le procédé selon l'une quelconque des revendications 1 à 10, lorsque ledit programme est exécuté par ledit processeur.

13. Un support de stockage d'informations, **caractérisé en ce qu'**il stocke un programme d'ordinateur comprenant des instructions pour implémenter, par un processeur, le procédé selon l'une quelconque des revendications 1 à 10, lorsque ledit programme est exécuté par ledit processeur.
